**Europäisches Patentamt**

**European Patent Office**

**Office européen des brevets**

(19)

(11) Veröffentlichungsnummer: **0 001 250**
A1

(12) EUROPÄISCHE PATENTANMELDUNG

(21) Anmeldenummer: **78100858.6**

(22) Anmeldetag: **09.09.78**

(51) Int. Cl.²: **H 01 G 4/18**
H 01 G 4/30, H 01 G 4/32
H 01 G 1/11

(30) Priorität: **24.09.77 DE 2743085**

(43) Veröffentlichungstag der Anmeldung:
**04.04.79 Patentblatt 79/7**

(84) Benannte Vertragsstaaten:
**DE FR GB NL**

(71) Anmelder: **Bayer Aktiengesellschaft**
**Zentralbereich Patente,Marken und Lizenzen Bayerwerk**
**D-5090 Leverkusen 1(DE)**

(72) Erfinder: **Schweitzer, Gerd, Dipl.-Ing.**
**Leopold-Gmelin-Strasse 52**
**D-5000 Köln 80(DE)**

(72) Erfinder: **Weber, Leo**
**Am Kirchpfad 9**
**D-4047 Dormagen 5(DE)**

(54) **Elektrischer Kondensator mit einem Dielektrikum aus schwer entflammbaren Folien.**

(57) Die Erfindung befaßt sich mit elektrischen mehrlagigen Kondensatoren, bei denen das Dielektrikum bzw. die Elektroden aus schwer entflammbaren Folien, Insbesondere Polycarbonat-Folien, bestehen.

FIG. 1

EP 0 001 250 A1

Croydon Printing Company Ltd.

BAYER AKTIENGESELLSCHAFT    5090 Leverkusen, Bayerwerk

Zentralbereich    Kr/kl-klu
Patente, Marken und Lizenzen

Elektrischer Kondensator

Die Erfindung betrifft einen elektrischen Kondensator aus mehrlagigen Folien, die als Dielektrikum und/oder Elektroden ausgebildet sind.

Kondensatoren mit auf Folien aufgedampften Metallschichten werden heute bei den verschiedensten elektrischen Geräten, wie z.B. bei Leuchtstoffröhren, eingesetzt. Da diese zum Teil unbeobachtet nachts in Betrieb sind, ist bei einem Versagen die Brandgefahr für die Umgebung sehr groß. Denn die bisher gebräuchlichen Kunststoff-Folien (z.B. Polypropylen PP, Polyester PETP und Papier) brennen meist vollständig ab. Dies ist insbesondere der Fall, wenn der Metallbecher aus Kostengründen weggelassen wird. Hinzu kommt noch, daß der oben erwähnte Kunststoff beim Brennen tropft, so daß auch gleichzeitig der Brandherd ausgeweitet wird.

Der Erfindung liegt die Aufgabe zugrunde bei mehrlagigen Kondensatoren mit metallisierten Leitern die brandschutztechnischen Eigenschaften insbesondere gegen Entzündung

Le A 18 427

-2-

durch äußere Beflammung zu verbessern, wobei die elektrischen Eigenschaften (z.B. dielektrischer Verlustfaktor, Selbstheilsicherheit,) für den jeweiligen Anwendungsfall noch voll ausreichend sein müssen.

Die Aufgabe wird erfindungsgemäß dadurch gelöst, daß mindestens eine Lage aus schwer entflammbarer Folie besteht.

Es ist überraschend, daß schon eine Lage einer schwer brennbaren Folie - unter sonstiger Beibehaltung des bekannten Aufbaues mit Polypropylen -,Polyäthylenterephthalat-,Polystyrol-,Papier -Folien etc. - genügt, die Nachbrennzeit des Kondensators nach einer Beflammung auf weniger als 10 sek. zu senken, wodurch die Brandgefahr gegenüber der Umgebung wesentlich herabgesetzt wird. Dieser Vorteil wird weiter unterstützt durch die Tatsache, daß ein Abtropfen wie bei den bisher eingesetzten Produkten nicht mehr erfolgt, so daß durch Vermeidung des Verspritzens brennender Stoffe ein eventuelles Feuer örtlich begrenzt bleibt.

In einer Ausführungsform besteht das Dielektrikum teilweise aus einer schwer entflammbaren Kunststoff-Folie.

Bei Verwendung der Kunststoff-Folie als Dielektrikum bleiben die brandtechnischen Eigenschaften und der damit gegebene  Vorteil erhalten.

In einer anderen Ausführungsform besteht die Elektrode aus einer beidseitig metallisierten, schwer entflammbaren Kunststoff-Folie.

Le A 18 427

-3-

Als Trägermaterial für die beidseitig aufgetragenen, elektrisch verbundenen Elektrodenflächen weist auch hier die Kunststoff-Folie die vorteilhaften brandtechnischen Eigenschaften auf. Andererseits kann für das Dielektrikum unabhängig davon jeder Werkstoff eingesetzt werden.

In einer besonderen Ausführungsform besteht die schwer brennbare Kunststoff-Folie aus Polycarbonat.

Die brandhemmenden Eigenschaften von bromiertem Polycarbonat sind so gut, daß schon geringe Dicken ausreichen, wobei immer noch die wechselstromtechnischen Eigenschaften für die derzeit bekannten Anwendungen völlig ausreichend sind.

Le A 18 427

-4-

Ausführungsbeispiele der Erfindung sind in den Zeichnungen dargestellt und werden im folgenden näher beschrieben. Es zeigen

Fig. 1    abwechselnde Lagen aus metallisierter Polycarbonat-Folie und metallisierter Polypropylen-Folie,

Fig. 2    abwechselnde Lagen aus metallisierter Polycarbonat-Folie und Polypropylen-Folie,

Fig. 3    abwechselnde Lagen aus beidseitig metallisierter Polycarbonat-Folie und Polypropylen-Folie.

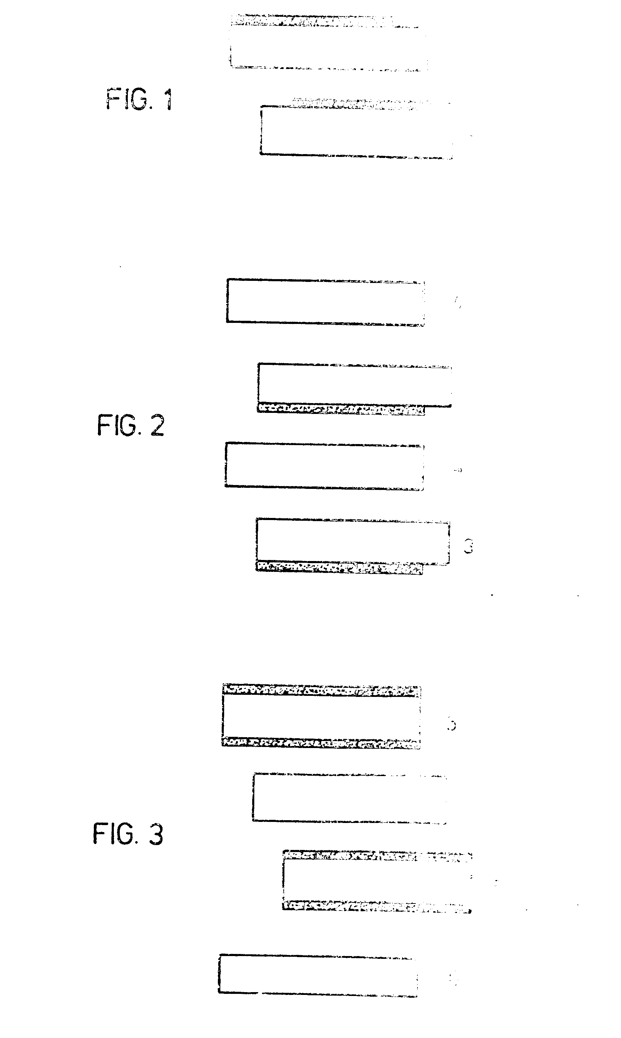

In Fig. 1 wird eine metallisierte Polycarbonat-Folie 1 zusammen mit einer metallisierten Polypropylen-Folie 2 gewickelt und in Parallelschaltung betrieben.

Versuche haben ergeben, daß selbst bei einem Volumenanteil der schwer entflammbaren Folie von ca. 27 % die Nachbrennzeit unter 0 sek. verringert wird und kein Abtropfen erfolgt.

In Fig. 2 wird zwischen einseitig metallisierte Polycarbonat-Folien 3 jeweils eine Polypropylen-Folie 4 gelegt, die dann in Serienschaltung betrieben werden.

Die vorher festgestellten brandtechnischen Eigenschaften bleiben erhalten, wobei der Dielektrikumswert von Propylen zusätzlich ausgenutzt wird.

Le A 18 427

- 5 -

In Fig. 3 wird die beidseitig metallisierte schwer entflammbare Polycarbonat-Folie 5 mit dazwischengelegter, unmetallisierter Polypropylen-Folie 6 gewickelt.

In den elektrischen Eigenschaften verhält sich dieser Kondensator wie ein Polypropylen-Kondensator. Dagegen werden die brandtechnischen Eigenschaften durch die Polycarbonat-Folie bestimmt.

Le A 18 427

- 6 -

Patentansprüche

1. Elektrischer Kondensator aus in Lagen angeordneten Folien, die als Dielektrikum und/oder Elektroden ausgebildet sind, dadurch gekennzeichnet, daß mindestens eine Lage aus schwer entflammbarer Folie besteht.

2. Elektrischer Kondensator nach Anspruch 1, dadurch gekennzeichnet, daß das Dielektrikum teilweise aus einer schwer entflammbaren Kunststoff-Folie besteht.

3. Elektrischer Kondensator nach Anspruch 1, dadurch gekennzeichnet, daß die Elektrode aus einer beidseitig metallisierten, schwer entflammbaren Kunststoff-Folie besteht.

4. Elektrischer Kondensator nach Anspruch 1 - 3, dadurch gekennzeichnet, daß die schwer entflammbare Kunststoff-Folie aus Polycarbonat besteht.

Le A 18 427

1/1

FIG. 1

FIG. 2

FIG. 3

**Europäisches Patentamt**

**EUROPÄISCHER RECHERCHENBERICHT**

Nummer der Anmeldung

EP 78 10 0858

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 1 564 057 (GENERAL ELECTRIC COMP.)<br>* Seite 3, Absatz 4; Seite 4; Patentansprüche * | 1,2,4 |
| X | FR - A - 1 396 532 (J.M. FRANKEL)<br>* Zusammenfassung * | 1,3,4 |

**KLASSIFIKATION DER ANMELDUNG (Int.Cl.²)**

H 01 G 4/18
4/30
4/32
1/11

**RECHERCHIERTE SACHGEBIETE (Int. Cl.²)**

H 01 G 4/24
4/30
4/32
4/18
1/11

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 19-12-1978 | VAN REETH |

EPA form 1503.1 06.78